# EUROPÄISCHE PATENTANMELDUNG

(11) **EP 2 840 168 A2**
(43) Veröffentlichungstag der Anmeldung: **25.02.2015**
(21) Anmeldenummer: 14177383.8
(22) Anmeldetag: 17.07.2014
(51) Int. Cl.: C25D 3/38, C25D 5/02, C25D 5/06, C25D 11/02

(54) **Verfahren zum Markieren eines Lagerringes, sowie Lagerring**

(30) Priorität: 20.08.2013 DE 102013216460
(71) Anmelder: Aktiebolaget SKF, 41 550 Göteborg (SE)
(72) Erfinder: von Schleinitz, Thilo, 97422 Schweinfurt (DE)
(74) Vertreter: Kuhstrebe, Jochen

(57) **Zusammenfassung**

Ausführungsbeispiele betreffen ein Verfahren (1) zum Markieren eines Lagerringes. Das Verfahren (1) umfasst ein Abscheiden (3) einer metallischen Nichteisenverbindung auf einer Oberfläche des unbrünierten Lagerringes, sodass sich eine Markierung an der Oberfläche des Lagerringes ausbildet, wobei die Markierung eine Farbe aufweist, die sich von der Farbe einer brünierten Oberfläche unterscheidet. Ferner umfasst das Verfahren (1) zumindest abschnittsweises Brünieren (5) der Oberfläche des Lageringes.

## Beschreibung

Ausführungsbeispiele beziehen sich auf ein Verfahren zum Markieren eines Lagerringes sowie einen markierten Lagerring.

Lagerringe, z.B. für Wälzlager, können in vielen Fällen eine Markierung, Beschriftung, oder sogar eine Nummerierung erhalten. Es kann sich beispielsweise um die Angabe von Typbezeichnungen zur Identifizierung des Lagers, um Zusätze zur Identifizierung von Sonderausführungen und Luftklassen, oder zusätzlich um Seriennummern handeln. Diese Markierung kann je nach Notwendigkeit zu Zuordnungszwecken bereits während des Herstellungsprozesses erfolgen, oder auch erst am Ende des Herstellungsprozesses.
Bei einem konventionellen Verfahren kann die Schrift oder Markierung auf den Ringen insbesondere elektrolytisch, also nasschemisch, erzeugt werden, indem mittels Tampongalvanisierverfahren und Schablone eine elektrolytische Abscheidung durchgeführt wird. In diesem Fall kann die Schrift oder Markierung beispielsweise aus Eisenoxid und/oder Eisenglukonat bestehen.

Seit einigen Jahren werden Lagerringe jedoch zunehmend einem Heissbrünierverfahren unterzogen, da sich Brünierschichten günstig auf die Lebensdauer und Performance von Wälzlagern auswirken können. Das Brünieren erzeugt in hochalkalischen Tauchbädern eine schwarze Eisenoxidschicht. Für die Lagerringe solcher Lager bestehen daher neue Anforderungen hinsichtlich der Beschriftungstechnik, sofern weiterhin mit Tampongalvanisieren gearbeitet werden soll.

Das Eisenoxid und/oder das Eisenglukonat der Markierung konventioneller Lagerringe kann bei einem anschließenden Brüniervorgang bzw. in einem Brünierbad rückstandsfrei aufgelöst werden. Dies kann ggf. dazu führen, dass die vor dem Brünieren aufgebrachte Markierung nach dem Brünieren nicht mehr erkennbar ist.

Des Weiteren kann in manchen konventionellen Verfahren zum Markieren von Lagerringen eine Säure zum Einsatz kommen, um die Markierung auf dem noch nicht brünierten Lagerring zu bewirken. Meist kann die mit der Säure in Kontakt gebrachte Fläche dabei dunkelgrau oder schwarz werden. Diese Fläche kann beispielsweise unbeschichteter Stahl sein. Derart geätzte Stahloberflächen erhalten jedoch in dem Brünierbad ebenfalls eine einheitlich schwarze Farbe entsprechend der umliegenden Brünierung. Ggf. kann die Markierung von einem menschlichen Betrachter oder einem automatischen bzw. optischen Erkennungs- oder Lesesystem dann nicht mehr erkannt werden.

Ferner kann die Markierung bei konventionellen Verfahren mittels einer flachen Laserbeschriftung aufgebracht werden. In diesen Fällen kann sich ggf. eine ähnliche Situation darstellen. Das gelaserte Eisen kann beim Brünieren beispielsweise ebenfalls schwarz werden. Alternativ kann bei einer Laserbearbeitung des Lagerringes als Markierung ein hauchdünnes Oxid entstehen. Dieses Oxid kann womöglich in die Schichtstruktur der Brünierschicht eingebaut werden. Damit könnte der Versuch eines Lesens und/oder Erkennens der so auf-gebrachten Schrift ggf. sehr schwierig und/oder aufwändig sein.

Ferner könnte beispielsweise mittels tiefer Laserbeschriftungen beim Aufbringen der Markierung ein Höhenunterschied erzielt werden, wodurch die Beschriftung auch nach dem Brünieren noch lesbar sein könnte. Allerdings erzeugen tiefe Laserungen ebenso wie Schlagzahlen einen Aufwurf und könnten ggf. toleranzgefährdend sein. Weiterhin ergeben diese Verfahren nachteilige Gefügeveränderungen, ggf. mit Rissbildungsgefahr.

Den beschriebenen konventionellen Verfahren zum Markieren eines Lagerringes ist gemeinsam, dass eine schwarze oder schwärzliche Schrift auf einem schwarzen Grund erzeugt wird, sodass die Beschriftung und Markierung der Lagerringe bzw. Lager nach dem Brünieren nicht praktikabel lesbar ist. Ein sicheres, einfaches, schnelles Lesen oder Erkennen der Markierung durch einen Benutzer, Betrachter oder ein automatisches System, ist damit nicht oder ggf. nur mit einem erheblichen Aufwand möglich.

Ferner kann es Anwendungen geben, bei denen es nicht erforderlich ist, eine Markierung oder Schrift zu erzeugen, die den Brünierprozess unverändert überdauert. Beispielsweise kann es für eine Großzahl der Serienlager möglich oder notwendig sein, eine Signierung oder Markierung insgesamt erst am Ende des Fertigungsdurchlaufs und ggf. nach dem Brünieren durchzuführen. Dies kann ggf. dann möglich oder notwendig sein, wenn vorher keine Verwechslung passieren kann, d.h. eine unverwechselbare Ringtype oder ein sortenreiner Auftrag brüniert wird, ohne dass vorher ggf. vermessen, sortiert und/oder gepaart worden ist.

Hierbei kann die Markierung in konventionellen Verfahren insbesondere durch Abscheidung einer nickelhaltigen Substanz bewirkt werden, da Nitrat und Glukonat auf einer eisenoxidischen Oberfläche kaum Wirkung zeigen. Ferner können die Elektrolyte ggf. weitere Bestandteile umfassen. Wirksam für die Schrifterzeugung können bei diesen konventionellen Verfahren aber vorwiegend die Nickelverbindungen, beispielsweise Nickelsalze sein. Für diese Nickelsalze können ggf. eine Gefahrstoffeingruppierung und gesetzlichen Deklarationspflichten bestehen. Daher können Nickelsalze ggf. als giftig und krebserregend gelten. Dies kann ggf. einen erhöhten Aufwand an Sicherheitsmaßnahmen für die Verwendung solcher derart gekennzeichneter Stoffe erfordern. Dadurch könnte es ggf. erforderlich sein, dass bestehende Arbeitsplätze, die dafür nicht ausgelegt waren, umgerüstet werden müssen, oder das Verfahren an diesen nicht mehr durchgeführt werden kann.

Es besteht daher ein Bedarf daran, einen Lagerring mit einer Markierung zu schaffen, bei dem die Markierung lesbar ist wenn der Lagerring in einem brünierten Zustand vorliegt. Ferner besteht ein Bedarf daran, ein entsprechendes Verfahren zum Beschriften oder Markieren eines solchen Lagerringes zu schaffen.

Diesem Bedarf tragen, gemäß einem ersten Aspekt, ein Verfahren nach dem Anspruch 1 sowie ein Lagerring nach dem Anspruch 5 Rechnung, wobei die Markierung wenigstens teilweise vor dem Brünieren auf eine unbrünierte Oberfläche aufgebracht ist. Ferner tragen diesem Bedarf, gemäß einem zweiten Aspekt, ein Verfahren nach dem Anspruch 6 sowie ein Lagerring nach dem Anspruch 10 Rechnung, wobei die Markierung zumindest teilweise nach dem Brünieren auf eine brünierte Oberfläche aufgebracht ist.

Bei einem Verfahren, gemäß dem ersten Aspekt, zum Markieren eines Lagerringes wird eine metallische Nichteisenverbindung oder ein Nichteisenmetall auf einer Oberfläche des unbrünierten Lagerringes abgeschieden, sodass sich eine Markierung an der Oberfläche des Werkstoffs ausbildet. Die Markierung weist eine Farbe auf, die sich von der Farbe einer brünierten Oberfläche unterscheidet. Ferner wird die Oberfläche des Lagerringes zumindest abschnittsweise brüniert.

Dadurch, dass die metallische Nichteisenverbindung oder das Nichteisenmetall auf einer Oberfläche des Lagerringes abgeschieden wird, bevor der Lagerring brüniert wird, kann erreicht werden, dass der Lagerring vor dem Brünieren dauerhaft markiert bzw. gekennzeichnet werden kann und die Markierung bzw. Kennzeichnung nach dem Brünieren weiterhin gut erkenn- und lesbar ist, ohne eine Maßhaltigkeit des Lagerringes oder seine Werkstoff- und Wärmebehandlungseigenschaften oder Gefügeeigenschaften und Eigenspannungen zu beeinflussen und/oder zu beeinträchtigen. Mit anderen Worten ausgedrückt, kann eine dünne Schicht erzeugt werden, welche in dem Brünierbad unlöslich ist, und als eisenfreie Schicht der Brünierung und damit auch der Schwarzfärbung unzugänglich ist.

Die metallische Nichteisenverbindung kann ein Nichteisenmetall sein, bzw. nur ein Nichteisenmetall umfassen. Der Lagerring kann als Werkstoff beispielsweise Stahl umfassen. Eine erste Farbe, beispielsweise die Farbe der Markierung, kann sich von einer zweiten Farbe, beispielsweise der Farbe der brünierten Oberfläche in jedweder Art und Weise unterscheiden, sodass die Markierung von einem menschlichen Betrachter oder einem optischen System gelesen, erkannt und/oder identifiziert werden kann. Beispielsweise kann das optische System jedwedes System sein, mit dem eine Markierung, die eine andere Farbe oder Lichtreflektion als der sie umgebende Hintergrund aufweist, erkannt werden kann. Beispiele für ein solches System können sein: ein optischer Sensor, eine Kamera, ein optisches Lesegerät, ein Barcode-Leser, Scanner etc.

Die Brünierung kann insbesondere eine schwarze Farbe aufweisen. Beispielsweise kann die Markierung jedwede hellere Farbe aufweisen, die sich von Schwarz unterscheidet. Beispielsweise kann die Farbe der Markierung grau, metallisch, weiß, gold, grün, gelb, orange, rot oder blau sein. Die Markierung kann eine Oberfläche aufweisen, die Licht in einem anderen Wellenlängenbereich und/oder einer anderen Intensität reflektiert als die brünierte Oberfläche. Beispielsweise kann die Markierung eine Oberfläche aufweisen, die um mindestens 5% mehr Licht reflektiert als die brünierte Oberfläche. Beispielsweise kann eine schwarze Oberfläche einen Remissionsgrad von 0,18% oder ca. 2 % aufweisen. Als Remissionsgrad kann ggf. ein Verhältnis einer von einer Oberfläche remittierten Leuchtdichte in Messrichtung zu der Leuchtdichte einer Oberfläche in einem Referenzweiß bezeichnet werden. Beispielsweise kann die Markierung einen Remissionsgrad aufweisen, der 10%, 25%, 50%, 60%, oder 80% beträgt. Unter Umständen kann die Markierung einen Remissionsgrad aufweisen, der mindestens um einen Faktor 10, 20, 50, 100, 500 oder 1000 größer ist, als der Remissionsgrad der Brünierung.

Mit anderen Worten ausgedrückt, könnte die Markierung in manchen Fällen eine höhere Anzahl unterschiedlicher Wellenlängen von Licht als die brünierte Oberfläche reflektieren. Die Farbe der Schicht oder der Markierung wird dabei kein Schwarzton entsprechend der Brünierschicht sein, sondern kann z.B. metallisch sein. Im Falle metallisch silberner Niederschläge könnte die metallische Markierung oder Schrift auf dem blanken bzw. unbrünierten Lagerring nur schlecht lesbar sein. Allerdings könnte sich nach dem Brünieren eine helle Schrift auf dem schwarzen oder dunklen Grund ergeben, die sehr gut lesbar sein kann. Mit anderen Worten ausgedrückt, könnte also ggf. ein Lagerring vor der Brünierung markiert werden, mit einem Material, das wenigstens nach dem Brünieren gut erkennbar ist.

Brünieren kann dabei (Grammatik) ggf. jedwede Verfahrensvariante zur Oberflächenveredelung sein, bei der auf Eisen bzw. Stahl eine schwarze eisenoxidische Oberfläche erzeugt werden kann. Üblicherweise durch Eintauchen des Werkstückes in eine heiße alkalische Lösung mit den typischen Bestandteilen Natriumhydroxid, Natriumnitrit und/ oder Natriumnitrat können sich schwarze Mischoxidschichten Fe3O4 aus FeO und Fe₂O₃ bilden.

Bei Ausführungsbeispielen umfasst die metallische Nichteisenverbindung Chrom (Cr), Nickel (Ni), Gold (Au) und/oder Silber (Ag) bzw. eine Verbindung zumindest eines dieser Elemente. Ggf. kann auch nur eines der genannten Nichteisenmetalle als Markierung abgeschieden werden. Dadurch kann eine Markierung oder ein Niederschlag hergestellt werden, die oder der beim Brünieren nicht aufgelöst wird. Nicht geeignete Materialien für das Markieren vor dem Brünieren könnten beispielsweise Zink (Zn), Zinn (Sn) und/oder Kupfer (Cu) sein bzw. alle Materialien, die in Lösung gehen bzw. sich in dem Brünierbad auflösen und/oder schwarz verfärben.

Bei bevorzugten Ausführungsbeispielen kann die Markierung nickelfrei und/oder chromfrei ausgebildet sein. Dadurch könnte beispielsweise eine einfache, gesundheits- und/oder umweltfreundliche Herstellbarkeit der Markierung ermöglicht werden, da Nickel sowie manche Chromlösungen ggf nur unter bestimmten Schutzmaßnahmen verarbeitet werden dürfen. Bei weiteren Ausführungsbeispielen kann die Markierung jedwede Substanz umfassen, die sich nicht in dem Brünierbad auflöst und eine Markierung mit einer Farbe bildet, die sich von Schwarz unterscheidet.

Ergänzend oder alternativ kann das Abscheiden gemäß Ausführungsbeispielen in einem nasschemischen Verfahren erfolgen. Beispielsweise kann das Verfahren elektrolytisch sein. Dadurch könnte die Markierung ggf. auf eine einfache Art und Weise aufgebracht werden. Beispielsweise kann das Verfahren auf einer Beschriftungsmaschine durchgeführt werden, in welcher die Beschriftung als ausgestanzte Folie vorgegeben sein kann, welche gegen das Werkstück gedrückt wird. Auf der dem Werkstück abgewandten Seite der Folie kann sich die chemische Lösung bzw. der Elektrolyt befinden, entweder eingesaugt in einem Schwamm (Tamponverfahren) oder in einem anderweitigen, beispielsweise durch Vakuum oder Schwerkraft vor Auslaufen gesichertem Reservoir. Hierdurch könnten zur Durchführung des Verfahrens konventionelle nasschemische Beschriftungsmaschinen benutzt werden. Dadurch kann die Markierung auf einfache Art und Weise aufgebracht werden. Beispielsweise kann das Werkstück, also der Lagerring, dabei als Kathode dienen. Die Anode kann dann der Trägerkörper des Schwammes beim Tamponverfahren, oder ein im Flüssigkeitsreservoir angeordneter leitender Körper sein. Anode und Kathode sind getrennt durch die bereichsweise durchbrochene und isolierend wirkende Folie, deren Ausbrüche bzw. Ausstanzungen sich auf das Werkstück übertragen. Mit diesem Verfahren kann eine sehr dünne Schicht erzeugt werden, mit Niederschlagsdicken im Mikrometerbereich. Dadurch kann die Markierung mit einer nur sehr geringen Menge der Substanz und niedrigem Elektrolytverbrauch gebildet werden.

Bei einigen weiteren Ausführungsbeispielen kann das Abscheiden bzw. ein Markieren außenstromlos chemisch erfolgen. Dadurch könnte beispielsweise ermöglicht werden, dass das Abscheiden ohne äußeren Stromfluss, auf sehr einfache Art und Weise, durchgeführt werden kann. Hier ist beispielsweise an chemisch-Nickel aus Nickel-Phosphor-Lösungen zu denken. Eine dünne Nickelabscheidung könnte sowohl elektrolytisch als auch wahlweise, mit Phosphoranteil (P), chemisch in kurzer Zeit (z.B. < 1 Minute) abgeschieden werden. Diese Nickelabscheidung würde eine Brünierbarriere bzw. Trennschicht darstellen. Dabei würde es sich im strengen Sinne nicht um ein sog. Vernickeln handeln. Bei einem Vernickeln wird beispielsweise in einem mehrere Minuten dauernden Prozess eine echte Schicht abgeschieden. Vielmehr erfolgt quasi nur ein hauchdünner Niederschlag von Nickel unter einem Mikrometer Dicke. Dieser Niederschlag könnte nach dem Brünieren zu einer hellen Fehlstellenstruktur führen, die als Markierung oder Schrift gelesen werden kann. Allerdings können ggf. nicht alle Substanzen zur außenstromlosen Abscheidung geeignet sein. Darüber hinaus kann sich das Risiko ergeben, dass eine Markierung nun nicht nur in dem durchbrochenen Bereich der Folie erfolgt, welcher geradlinig Stromlinien hindurchtreten lässt, sondern auch unbeabsichtigt in Bereichen, wo die Flüssigkeit durch Kapillarwirkung oder Undichtigkeit mit dem Werkstück in Kontakt kommt. Deswegen kann dies ggf. keine bevorzugte Lösung sein.

Bei einigen weiteren Ausführungsbeispielen wird ein Goldelektrolyt eingesetzt. Da die aufgebrachte Schicht oder der Niederschlag nur sehr dünn sind, kann eine Schrift oder Markierung mit einem geringen Materialeinsatz erzeugt werden. Mit anderen Worten ausgedrückt, könnte eine Markierung, die mittels eines Goldelektrolyts aufgebracht wird, sehr dünn sein und unter zusätzlicher Berücksichtigung der im Verhältnis geringen Beschriftungsfläche das Werkstück nicht wesentlich verteuern. Damit kann eine hervorragend lesbare Schrift und/oder Markierung sowohl auf dem unbrünierten Lagerring als auch auf dem brünierten Lagerring erzeugt werden. Teilbereiche, die vor dem Brünieren beschriftet werden, unterscheiden sich unter Verwendung von Gold optisch in keiner Weise von Zusätzen wie Seriennummern, die nach dem Brünieren beschriftet werden. Die hervorragend lesbare Markierung kann des Weiteren sehr attraktiv und wertig aussehen (Goldschrift auf schwarzem Ring).

Bei einigen weiteren Ausführungsbeispielen erfolgt also zusätzlich zum Beschriften vor dem Brünieren auch nach dem Brünieren eine weiteres Abscheiden derselben metallischen Nichteisenverbindung oder desselben Nichteisenmetalls auf der Oberfläche des brünierten Lagerringes, sodass sich eine weitere Markierung an der Oberfläche des Lagerringes ausbildet, wobei die weitere Markierung eine Farbe aufweist, die sich ebenfalls von der Farbe der brünierten Oberfläche unterscheidet. Dadurch könnte ggf. ermöglicht werden, eine Markierung und/oder Typenbezeichnungen auch noch nach dem Brünieren aufzubringen. Die weitere Markierung bzw. eine Lager- und/oder Seriennummer könnte nach dem Brünieren bei einer Endmontage aufgebracht werden. Dadurch könnte ggf. erreicht werden, dass eine Markierung, die vor dem Brünieren aufgebracht wird, genauso aussehen kann bzw. die gleiche Farbe aufweisen kann, wie eine weitere Markierung, die nach dem Brünieren aufgebracht wird. So könnte ggf. in Anwendungen, in denen es erforderlich sein kann, brünierte Ringe sowohl vor als auch nach dem Brünieren mit Beschriftungen zu versehen, eine optisch einheitliche Markierung zu schaffen. Dies kann beispielsweise gewünscht sein, wenn bereits vor dem Brünieren eine Lagertypbezeichnung zur Sicherstellung der richtigen Zuordnung benötigt wird, und wenn nach dem Brünieren im Rahmen der Lagermontage und Vermessung zusätzlich eine Seriennummer ergänzt werden soll.

Ausführungsbeispiele gemäß dem ersten Aspekt, wobei die Markierung vor dem Brünieren aufgebracht wird, betreffen einen Lagerring. Der Lagerring umfasst eine zumindest abschnittsweise brünierte Oberfläche. Ferner umfasst er eine Markierung. Die Markierung weist eine Fläche auf. Ferner weist die Markierung auch eine Farbe auf, die sich von der Farbe der brünierten Oberfläche unterscheidet. Die Fläche der Markierung und eine Fläche der Oberfläche, die der Fläche der Markierung entspricht und von dieser überdeckt ist, sind unbrüniert. Dadurch kann ein Lagerring, beispielsweise für ein Gleit- oder Wälzlager, bereitgestellt werden, der direkt nach der Herstellung, aber vor dem Brünieren markiert werden kann, sodass die Markierung auch nach dem Brünieren noch lesbar sein kann. Beispielsweise könnte der Lagerring mittels eines Verfahrens nach einem der genannten Ausführungsbeispiele markiert und/oder beschriftet sein. Beispielsweise kann die Markierung auf einer planen Seitenfläche des Lagerings angeordnet sein.

Ein Verfahren gemäß dem zweiten Aspekt zum Markieren eines Lagerringes umfasst ein zumindest abschnittsweises Brünieren einer Oberfläche des Lagerringes. Ferner umfasst das Verfahren das Abscheiden einer zink- (Zn), kupfer- (Cu), chrom- (Cr), gold- (Au) und/oder silberhaltigen (Ag) Nichteisenverbindung auf der brünierten Oberfläche des brünierten Lagerringes, sodass sich eine Markierung an der brünierten Oberfläche des Lagerringes ausbildet. Beispielsweise kann auch eines der genannten Nichteisenmetalle abgeschieden werden. Die Markierung weist eine Farbe auf, die sich von einer Farbe der brünierten Oberfläche unterscheidet.

Dadurch, dass die Markierung nach dem Brünieren aufgebracht wird, könnte ggf. eine Substanz verwendet werden, die nicht brünierbadresistent sein muss. Über die Verwendung von Chrom, Nickel, Silber und Gold und seinen Verbindungen hinaus ist dann die Verwendung von Kupfer oder Zink und seinen Verbindungen möglich. Ferner könnte dadurch, dass eine zink-, kupfer-, gold-, und/oder eine silberhaltige Substanz abgeschieden wird, ggf. eine nickelfreie und/oder chromfreie Markierung erfolgen. Dadurch könnte beispielsweise eine Umweltverträglichkeit erhöht werden bzw. notwendige Sicherheitsmaßnahmen zur Durchführung des Verfahrens vereinfacht oder reduziert werden. Während die Goldschrift ein herausragendes optisches Ergebnis liefern kann, könnte beispielsweise mit der Zink- und/oder Kupferverbindung eine zumindest mattgraue bzw. von der Brünierschwärze erkennbar abweichende Schrift erzeugt werden.

Bei einigen weiteren Ausführungsbeispielen wird die Markierung in einem elektrolytischen Verfahren abgeschieden. Dadurch könnte ggf. eine einfache Durchführung des Verfahrens ermöglicht werden. Zu dem elektrolytischen Abscheiden kann bei dem Verfahren mittels Tampongalvanisieren beispielsweise eine Spannung von 50 Volt und/oder eine Stromstärke bis zu 2 Ampere, beispielsweise 1 Ampere verwendet werden. Beispielsweise kann das Verfahren an einem Handsignierplatz oder einem Automaten durchgeführt werden. Beispielsweise kann ein Elektrolyt verwendet werden, der in einem breiten Parameterband abscheidefähig sein kann.

Elektrolyte können sauer, neutral oder alkalisch sein. Bei sauren Elektrolyten kann ggf. im Nachgang zum Signieren eine erhöhte Korrosionsgefahr für den Grundwerkstoff bestehen. Deswegen kann dort ggf. als zusätzlicher Arbeitsgang das nachfolgende Neutralisieren erforderlich sein. Dennoch kann die Korrosionsgefahr ggf. nur ausgeschlossen werden bei schwachsauren bis alkalischen Elektrolyten (pH-Wert größer 5,0). Starksaure pH-Werte können darüber hinaus ggf. ungünstig sein, weil damit die Brünierschicht auf medienbenetzten Oberflächen abseits der beabsichtigten Beschriftung angegriffen werden kann.

Bei einigen weiteren Ausführungsbeispielen kann ein Elektrolyt, der die aufzubringende Nichteisenverbindung umfasst, einen pH-Wert über 5,0 aufweisen. Dadurch kann bewirkt werden, dass der Lagerring und eine bereits vorhandene umliegende Brünierung nur so wenig wie möglich von dem Elektrolyten angegriffen werden kann. Mit anderen Worten ausgedrückt, könnte in manchen Fällen ggf. ein alkalischer, neutraler oder nur schwach saurer Elektrolyt eingesetzt werden. Dadurch könnte ggf. vermieden bzw. die Gefahr reduziert werden, dass bei einer Unterwanderung der Folie eine benachbarte Brünierung ggf. unschön angeätzt werden kann, wie es beispielsweise bei einer Verwendung starksaurer Medien passieren könnte. Ferner kann, nach der Beschriftung oder Markierung, das Werkstück nur abgewischt werden und muss nicht neutralisiert werden, da der höchstens schwachsaure Medienrückstand keine Korrosion auslösen kann. Starksaure und somit weniger geeignete Beschriftungselektrolyte können beispielsweise typische pH-Werte von 1,8 bis 2,5 aufweisen.

Ferner könnte für das Verfahren als Schablone beispielsweise eine isolierende Kunststoff-Folie mit durchgestanzter Schrift bzw. Markierung und ggf. ein strombeaufschlagter Schwamm verwendet werden. Das Verfahren kann manuell oder automatisch durchgeführt werden.

Der Elektrolyt kann über die für die Metallabscheidung notwendigen Zusätze hinaus ggf. Alkohol (C₂H₆O), ggf. einen geringen Anteil an Carbonsäure und/oder ggf. weitere zusätzliche Substanzen, beispielsweise zur Einstellung des pH-Werts, umfassen. Wirksam für die Schrifterzeugung können beispielsweise die zink-, kupfer-, chrom-, gold-, und/oder silberhaltigen Verbindungen sein. Zur Unterstützung der Elektrolytwirkung können Nitrit (M⁺NO₂⁻⁾, Nitrat (M^{I}NO₃) und Glukonat (C₆H₁₂O₇) zugegeben sein, die direkten Einwirkungen dieser Stoffe auf eine lesbare auf einer Brünierung abzuscheidende Schrift sind jedoch gering.

Bei einigen weiteren Ausführungsbeispielen erfolgt das Abscheiden der Nichteisenverbindung in einem Tampon- oder Tampongalvanisierverfahren. Dadurch kann ein einfaches Aufbringen der Markierung bewirkt werden.

Bei einigen weiteren Ausführungsbeispielen umfasst der Elektrolyt eine Nitrat- und/oder Nitritlösung. Dadurch könnte beispielsweise bewirkt werden, dass für die Einstellung der Leitfähigkeit und des Abscheideverhaltens der Elektrolyt die gleiche Basis wie die Brünierlösung bzw. das Brünierbad umfasst. Durch die Verwendung dieser Sauerstoffdonatoren kann eine Schonung der Brünierung und/oder eine Verhinderung von Sauerstoffentzug aus der Schicht erreicht werden.

Bei dem Elektrolyten für das Beschriften auf einer bereits bestehenden Brünierung kann es sich in einem speziellen Ausführungsbeispiel um eine wässrige Lösung mit einer Kupferverbindung, insbesondere Kupfernitrat (Cu(NO₃)₂), handeln. Ggf kann der Elektrolyt als weitere Inhaltsstoffe Natriumnitrit (NaNO₂) und/oder Natriumnitrat (NaNO₃) und/oder Glukonat umfassen. Ergänzend kann der Elektrolyt einen Alkohol (z.B. für eine verbesserte Benetzung) und/oder ggf. einen pH-Wert Einsteller umfassen. Beispielsweise kann der pH-Wert Einsteller Natriumhydroxid (NaOH) und/oder Natriumcarbonat (Na₂CO₃) sein. Mit Natriumcarbonat als pH-Wert Einsteller könnte ggf. das Verfahren ungefährlicher gemacht werden. Die Verwendung von Natriumnitrit könnte ggf. bewirken, dass ein nicht korrosiver Elektrolyt, beispielsweise mit einer guten Leitfähigkeit und einem guten Angriffsverhalten, bereitgestellt werden kann.

Es ist günstig, die Brünierung (Eisenoxid) möglichst zu erhalten. In manchen Brünierbädern kann die Eisenoxidation mit Natriumnitrit und/oder Natriumnitrat durchgeführt werden. Es könnte deswegen vorteilhaft sein, die Elektrolyten bzw. die Signierflüssigkeit auf der gleichen Basis aufzubauen. Mit anderen Worten ausgedrückt, kann das Brünierbad die gleiche Oxidationsbasis wie der Elektrolyt aufweisen. In diesem Zuge ist auch die Wahl der Metallverbindungen so, dass für Kupfer vorzugsweise ein Kupfernitrat und für Zink ein Zinknitrat (Zn(NO₃)₂) gewählt werden kann.

Ausführungsbeispiele gemäß dem zweiten Aspekt betreffen einen Lagerring. Der Lagerring umfasst eine zumindest abschnittsweise brünierte Oberfläche. Ferner umfasst er eine Markierung. Die Markierung umfasst eine zink-, kupfer-, chrom-, gold-, und/oder silberhaltige Substanz. Die Markierung weist eine Farbe auf, die sich von einer Farbe der brünierten Oberfläche unterscheidet. Die Markierung ist wenigstens teilweise auf die Brünierung aufgebracht. Dadurch könnte ggf. ein Lagerring bereitgestellt werden, der nach dem Brünieren mit einer gut lesbaren Markierung markiert und/oder beschriftet worden ist. Dadurch könnte ggf. ein Lagerring bereitgestellt werden, der nach dem Brünieren markiert werden kann, wobei die Brünierung ggf. erhalten bleiben kann.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben.

So zeigen die Figuren schematisch die nachfolgenden Ansichten.
Fig. 1 zeigt ein Flussdiagramm eines Verfahrens nach einem Ausführungsbeispiel, gemäß einem ersten Aspekt, wobei die Markierung zumindest teilweise vor dem Brünieren aufgebracht wird;
Fig. 2 zeigt eine schematische Darstellung des Verfahrens nach dem Ausführungsbeispiel gemäß Fig. 1;
Fig. 3 zeigt ein Flussdiagramm eines Verfahrens nach einem Ausführungsbeispiel, gemäß einem zweiten Aspekt, wobei die Markierung nach dem Brünieren aufgebracht wird;
Fig. 4 zeigt eine schematische Darstellung des Verfahrens nach dem Ausführungsbeispiel gemäß Fig. 3;
Fig. 5 zeigt eine schematische Darstellung eines Verfahrens zum Markieren eines Lagerringes gemäß einem weiteren Ausführungsbeispiel;
Fig. 6 zeigt eine Vorderansicht eines Wälzlagers mit Lagerringen nach den Ausführungsbeispielen.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

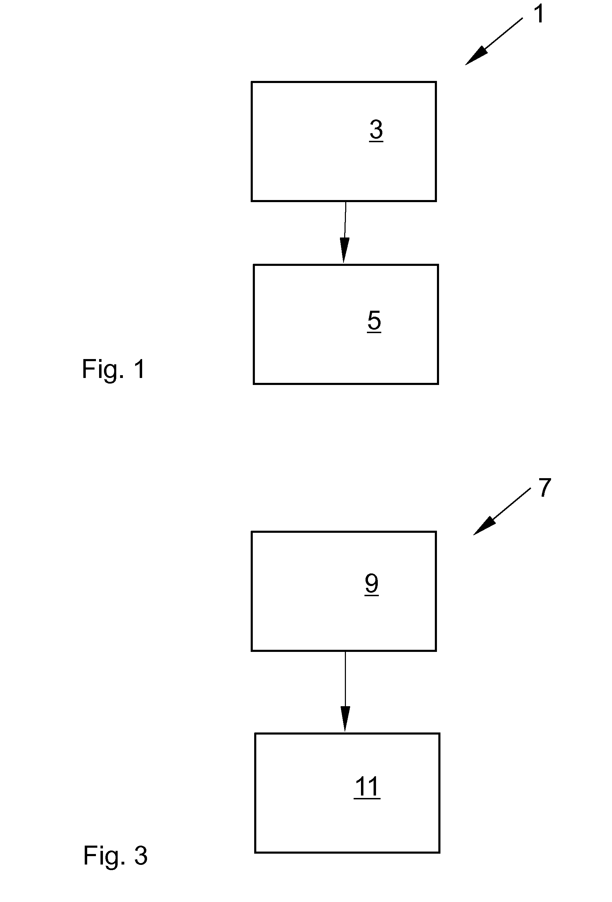

Fig. 1 zeigt ein Flussdiagramm eines Verfahrens nach einem Ausführungsbeispiel gemäß einem ersten Aspekt, wobei die Markierung zumindest teilweise vor dem Brünieren aufgebracht wird.

Bei einem in Fig. 1 gezeigten Verfahren 1 zum Markieren eines Lagerringes wird in einem Vorgang 3 eine metallische Nichteisenverbindung auf einer Oberfläche des unbrünierten Lagerringes abgeschieden, sodass sich eine Markierung an der Oberfläche des Lagerringes ausbildet. Die Markierung weist eine Farbe auf, die sich von einer Farbe einer brünierten Oberfläche unterscheidet. In einem weiteren Vorgang 5 wird die Oberfläche des Lagerringes zumindest abschließend brüniert.

Der Lagerring wird also vor dem Brünieren markiert, sodass die Markierung nach dem Brünieren lesbar ist. Wenn der blanke bzw. unbrünierte Lagerring vor dem Brünieren beschriftet oder markiert wird, kann es ggf. sein, dass die Markierung schlecht lesbar sein kann. Allerdings tritt die Markierung nach dem Brünieren gut lesbar hervor. Die Markierung oder auch die metallische Nicht-Eisen-Verbindung kann beispielsweise Gold, Silber, Nickel oder Chrom umfassen. Aus Gründen der leichteren Verarbeitbarkeit kann ggf. Gold oder Silber oder Nickel verwendet werden. Aus Gesundheits- und umwelttechnischen Gründen kann ggf. eine nickelfreie Markierung erzeugt werden. Beispielsweise kann ein Markieren des Lagerringes vor dem Brünieren günstig sein, wenn die Lagerringe vor dem Brünieren vermessen, sortiert und/oder gepaart worden sind.

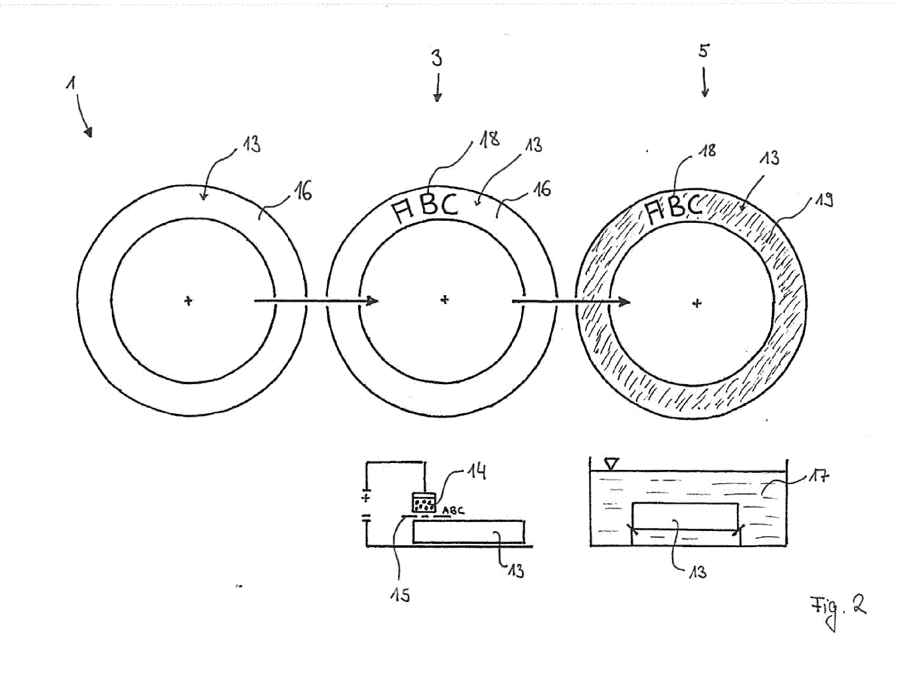

Fig. 2 zeigt eine schematische Darstellung des Verfahrens nach dem Ausführungsbeispiel gemäß Fig. 1.

In Fig. 2 ist ein Lagerring 13 in unterschiedlichen Zwischensituationen bei der Bearbeitung nach dem Verfahren 1 dargestellt. In der ersten Situation ist der Lagerring 13 vor dem Markieren dargestellt. In der zweiten Situation ist der Lagerring nach dem Markieren in dem Vorgang 3 dargestellt. In der dritten Situation ist der Lagerring 13 nach dem Brünieren in dem weiteren Vorgang 5 dargestellt. Bei dem Verfahren 1 wird mit einem Lagerring 13 mit einer blanken, unbrünierten Oberfläche 16 begonnen. Auf dessen unbrünierter Oberfläche 16 wird eine Markierung 18 abgeschieden. Das Abscheiden kann beispielsweise, wie für den Vorgang 3 schematisch dargestellt, in einem elektrolytischen Verfahren erfolgen. Der Lagerring 13 dient dabei als Kathode. Als Anode dient ein Schwamm 14. Alternativ kann auch ein anderer in einem nicht dargestellten Flüssigkeitsreservoir angeordneter, leitender Körper als Anode dienen. Zwischen dem Lagerring 13 und dem Schwamm 14 bzw. der Kathode und der Anode ist eine als Schablone wirkende Folie 15 angeordnet. Aus der Folie 15 ist die auf den Lagerring 13 aufzubringende Markierung 18 ausgestanzt. Bei dem Ausführungsbeispiel der Fig. 2 ist die Markierung als Buchstabenkombination "ABC" ausgebildet. Bei weiteren, nicht dargestellten Ausführungsbeispielen kann die Markierung jedwede Buchstaben- und/oder Ziffernkombination sein. Ergänzend oder alternativ kann die Markierung ggf. ein Symbol sein. In dem Vorgang 5 wird der mit der Markierung 18 markierte Lagerring 13 brüniert. Dazu wird der Lagerring 13 in eine Brünierflüssigkeit 17 gelegt oder getaucht.

Fig. 3 zeigt ein Flussdiagramm eines Verfahrens nach einem Ausführungsbeispiel, gemäß einem zweiten Aspekt, wobei die Markierung nach dem Brünieren aufgebracht wird.

Bei einem in Fig. 3 gezeigten Verfahren 7 zum Beschriften eines Lagerringes 13 wird in einem Vorgang 9 eine Oberfläche des Lagerringes zumindest abschnittsweise brüniert. Ferner wird in einem weiteren Vorgang 11 eine zink-, kupfer-, chrom-, gold-, und/oder silberhaltige Nichteisenmetallverbindung auf einer brünierten Oberfläche des brünierten Lagerringes abgeschieden, sodass sich eine Markierung an der brünierten Oberfläche des Lageringes ausbildet. Die Markierung weist eine Farbe auf, die sich von der Farbe der brünierten Oberfläche unterscheidet.

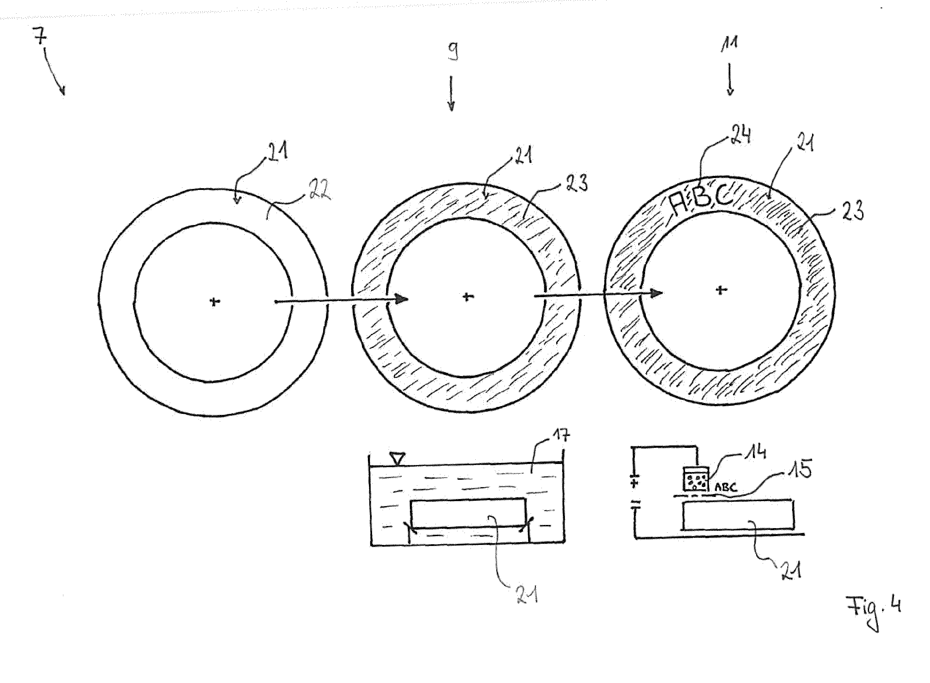

Fig. 4 zeigt eine schematische Darstellung des Verfahrens nach dem Ausführungsbeispiel gemäß Fig. 3.

Fig. 4 zeigt einen Lagerring 21 in unterschiedlichen Stadien während des Markierens nach dem Verfahren 7. Vor dem Vorgang 9, in dem der Lagerring 21 brüniert wird, weist der Lagerring 21 eine blanke Oberfläche 22 auf. In dem Vorgang 9 wird der Lagerring 21 brüniert, sodass er eine brünierte Oberfläche 23 aufweist. Dazu wird der Lagerring 21 in die schematisch dargestellte Brünierflüssigkeit 17 getaucht. Während des Vorgangs 11 erhält der brünierte Lagerring 21 auf seiner brünierten Oberfläche 23 eine Markierung 24. Dazu wird eine zink-, kupfer-, chrom-, gold-, und/oder silberhaltige Nichteisenmetallverbindung auf der brünierten Oberfläche 23 des brünierten Lagerringes 21 abgeschieden. Das Abscheiden kann elektrolytisch erfolgen. Dies kann analog, wie für Verfahren 1 bereits beschrieben, erfolgen.

Bei einer speziellen Ausführung des Verfahrens 7 nach den Ausführungsbeispielen der Fig. 3 und 4 kann die aus konventionellen Lösungen bekannte Nickelverbindung durch eine Kupferverbindung ersetzt werden. Kupfer als Substanz kann ggf. je nach Wertigkeit und Verbindung zu unterschiedlichen Farbabscheidungen führen, wobei ggf. ein matter dunkelgrauer Ton erzeugt werden kann, der sich jedoch deutlich von einem Farbbild der Brünierung (Brünierschwärze) abhebt.

Ferner können ggf. andere Kupferverbindungen davon abweichende Farben außerhalb der Grau- und Schwarzskala liefern. Allerdings können Kupferverbindungen, die solche bunteren Farben liefern, eher zu Farbvariationen tendieren. Dies könnte ggf. einem wertigen, wiederholbaren Erscheinungsbild der Markierung und damit ggf. auch des Produkts abträglich sein, insbesondere dann, wenn ggf. eine Vielzahl von Produkten miteinander verglichen werden sollen.

Beispielsweise kann als günstige Kupferverbindung Kupfernitrat gewählt werden. Ferner kann das Verfahren als eine elektrolytische nasschemische Abscheidung, beispielsweise in einem Tampon- oder Tampongalvanisierverfahren durchgeführt werden. Dazu kann beispielsweise eine Spannung von 50 Volt und/oder 1 Ampere gewählt werden. Dadurch kann eine Markierung und/oder eine Beschriftung auf einer Brünierung erzeugt werden, die sehr deutlich, sauber und gleichmäßig sein kann. Der Elektrolyt bzw. eine Basislösung kann Kupfernitrat sowie Natriumnitrit oder Natriumnitrat sowie ggfs. Glukonat umfassen. Beispielsweise kann der Elektrolyt einen Anteil von < 4% Natriumnitrit, einen Anteil von <1,5% Kupfernitrat und einen Anteil von ca. 2% Glukonat umfassen.

Kupfer ist bevorzugt vor Zink, weil bei der Verwendung von Zinknitrat ein Löslichkeitsproblem auftreten kann, bei der Verwendung von Zinkchlorid hingegen ein unerwünscht saurer Charakter entsteht. Mit Kupfernitrat lässt sich hingegen ein Elektrolyt herstellen, der schon ohne alkalischere pH-Einstellung bereits einen pH-Wert knapp oberhalb von 5,0 im geeigneten Bereich besitzt.

Bei einigen weiteren Ausführungsbeispielen kann der Elektrolyt einen Kupfernitratanteil deutlich unterhalb von 1,5 %, insbesondere von ca. 0,5%, umfassen. Dies könnte ggf. zur Stabilisierung der Lösung bei hohen Umgebungstemperaturen vorteilhaft sein. Insbesondere könnte bei höheren Konzentrationen, insbesondere von Kupfernitrat, eine mögliche unerwünschte Hitzeaktivierung (z.B. bei sommerlichen Temperaturen) auftreten. Beispielsweise könnte diese Hitzeaktivierung von Kupfernitrat sonst zu einer Zersetzungsreaktion führen, die einmal gestartet, langsam aber unaufhörlich die Stickstoffverbindungen in nitrose Gase umsetzten könnte. Dies könnte unter Umständen zu einer kritischen Druckerhöhung (beispielsweise in einem Gebinde) führen. Mit anderen Worten ausgedrückt, könnte bei einer niedrigeren Konzentration von Kupfernitrat, beispielsweise 0,5%, in dem Elektrolyten nichts Ähnliches passieren.

Bei einigen weiteren Ausführungsbeispielen kann der Elektrolyt zusätzlich Natriumhydroxid oder Natriumcarbonat (z.B. Soda) umfassen. Dadurch könnte ggf. eine alkalischere pH-Wert Einstellung bewirkt werden. Beispielsweise könnte der Kupfernitrat-Elektrolyt ohne Korrektur einen pH-Wert in einem schwach sauren Bereich von 4,9 bis 5,3 (je nach Konzentration) aufweisen und von dort weiter nach neutral korrigiert werden. Ferner kann die Lösung destilliertes Wasser oder gereinigtes Wasser mit einem pH-Wert zwischen 5 und 7 umfassen.

Die Einstellung des pH-Werts kann je nach Bedingungen sinnvoll oder günstig sein. Werden die Ringe vor dem Signieren nur abgewischt und nicht entfettet, dann ist ein leichtsaurer pH-Wert im Bereich 5,0-5,5 sinnvoll, um trotz der trennmittelbehafteten Oberfläche eine korrekte elektrolytische Abscheidung zu erreichen. Bei entfetteten Ringen hingegen kann durch einen Neutralelektrolyt oder gar einen alkalischen Elektrolyt die geringe Korrosionsgefahr nach dem Signieren (ohne Neutralisieren) noch weiter gesenkt werden.

Der Elektrolyt kann, wegen der sehr geringen Konzentration der oben genannten wirksamen Inhaltsstoffe oder Zusatzstoffe, einen Anteil von über 90% von destilliertem Wasser aufweisen. Dadurch können ein minimaler Materialeinsatz und so minimale Herstellungskosten für den Elektrolyten und damit für das Verfahren bewirkt werden. Ergänzend oder alternativ kann der Elektrolyt eine Zinkverbindung umfassen. Beispielsweise kann die Zinkverbindung Zinkchlorid (ZnCl₂) und/oder Zinknitrat (Zn(NO₃)₂) und/oder Zinknitrit sein.

Es kann ein wirksames Verfahren zur deutlichen elektrolytischen Beschriftung von brünierten Ringen oder Lagerringen bereitgestellt werden.

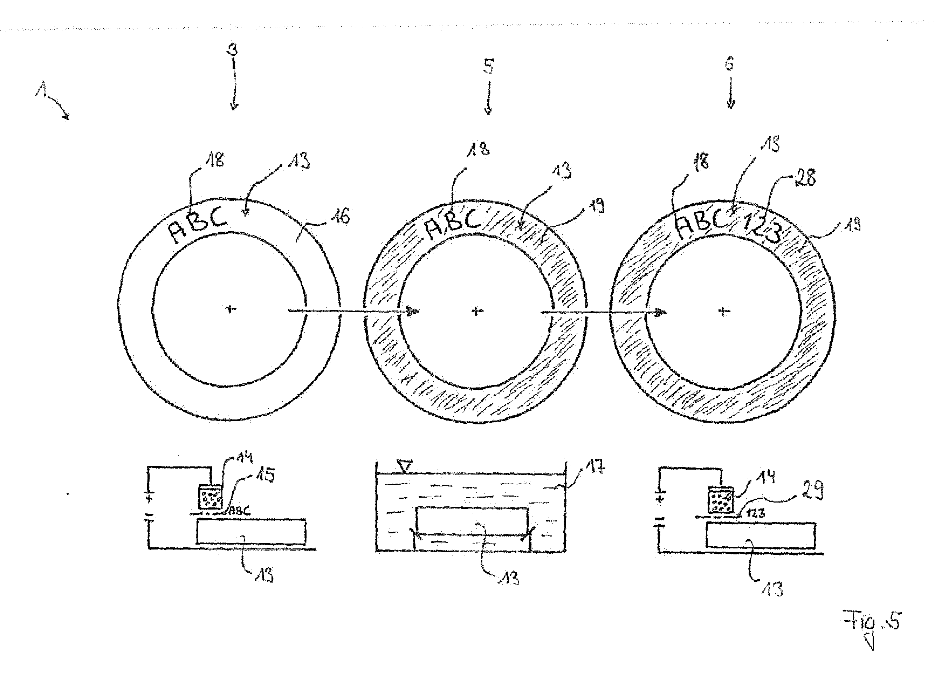

Fig. 5 zeigt eine schematische Darstellung eines Verfahrens zum Markieren eines Lagerringes gemäß einem weiteren Ausführungsbeispiel.

Bei dem Verfahren der Fig. 5 wird ein Lagerring 13 zweimal markiert. Die erste Markierung wird vor dem Brünieren aufgebracht. Die zweite Markierung wird nach dem Brünieren aufgebracht.

Dazu wird zuerst eine Markierung 18 auf eine unbrünierte Oberfläche des Lagerrings 13 aufgebracht. Dies kann ggf. elektrolytisch, analog zum Vorgang 3 des Verfahrens 1, erfolgen. Anschließend kann der Lagerring 13, mit der Markierung 18, analog zu dem Vorgang 5 des Verfahrens 1 brüniert werden. Dabei erhält der Lagerring 13 eine brünierte Oberfläche 19. In einem weiteren Vorgang 6 nach dem Brünieren wird eine weitere Markierung 28 auf die brünierte Oberfläche 19 des Lagerringes 13 aufgebracht bzw. abgeschieden. Dazu wird beispielsweise eine metallische Nichteisenverbindung auf der Oberfläche 19 abgeschieden. Dies kann ggf. elektrolytisch erfolgen. Zwischen die Anode 14 und den Lagerring 13 als Kathode wird eine andere Schablone oder Folie 29 verwendet. Aus der Folie 29 ist die Form der Markierung 28 ausgestanzt. Beispielsweise kann zum Herstellen der Markierung 18 vor dem Brünieren und zum Herstellen der Markierung 28 die gleiche metallische Nichteisenverbindung auf den Lagerring 13 abgeschieden werden. Dadurch könnte beispielsweise erreicht werden, dass in unterschiedlichen Stadien Markierungen erzeugt werden können, die ein gleiches Erscheinungsbild aufweisen. Dadurch könnte ggf. ein optisch guter Gesamteindruck erzielt werden. Die nicht eisenmetallhaltige Substanz kann vor und nach dem Brünieren abgeschieden werden. Es können also Typenbezeichnungen vor dem Brünieren aufgebracht werden und Lager- und Seriennummern nach dem Brünieren bei den Endmontage. Dies kann beispielsweise aus fertigungstechnischen Gründen vorteilhaft sein. Beide Markierungen oder Schriften können genau gleichfarbig aussehen.

Mit den beschriebenen Verfahren können also Markierungen erzeugt werden, die unterschiedliche Anforderungen erfüllen. Wird die Markierung vor dem Brünieren aufgebracht, so kann sie den Brünierprozess gut lesbar überdauern. Wird die Markierung nach dem Brünieren aufgebracht, so kann sie nur eine gute Lesbarkeit besitzen, muss jedoch nicht zwingend brünierbadresistent sein. Wird die Markierung teils vor und teils nach dem Brünieren aufgebracht, so kann ein einheitlicher optischer Eindruck erreicht werden.

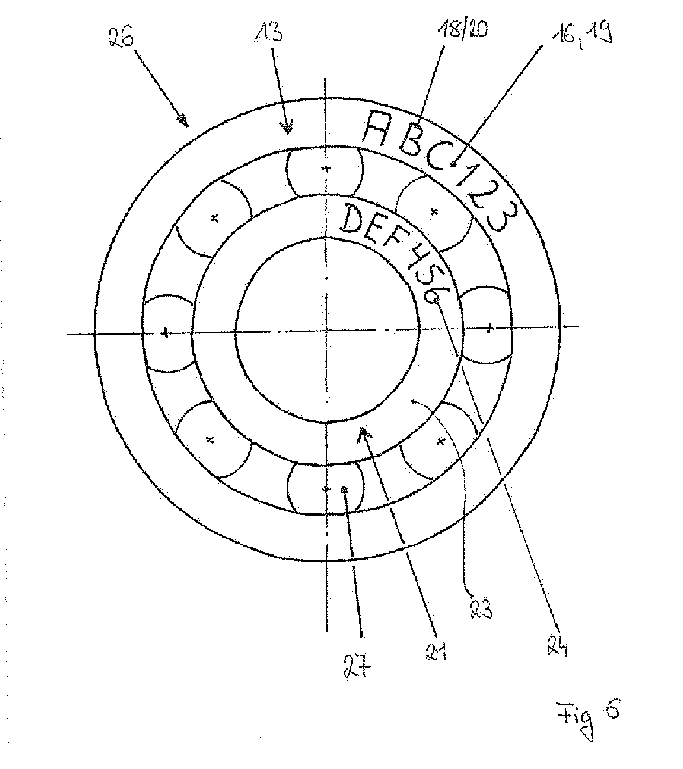

Fig. 6 zeigt eine Vorderansicht eines Wälzlagers mit Lagerringen gemäß den Ausführungsbeispielen.

Ein in Fig. 6 gezeigter Lagerring 13 umfasst eine zumindest abschnittsweise brünierte Oberfläche 19. Der Lagerring 13 umfasst ebenfalls eine Markierung 18. Die Markierung 18 weist eine Farbe auf, die sich von einer Farbe der brünierten Oberfläche 16 unterscheidet. Ferner umfasst die Markierung 18 eine Fläche 20. Die Fläche 20 der Markierung 18 und eine Fläche der Oberfläche 16 die der Fläche 20 der Markierung 18 entspricht und von dieser überdeckt ist, ist unbrüniert.

Der Lagerring 13 kann beispielsweise nach dem Verfahren 1 markiert worden sein. Die Markierung 18 wurde vor dem Brünieren aufgebracht. Beispielsweise kann der Lagerring 13 ein Außenring eines Lagers 26 sein.

Ein in Fig. 6 gezeigter Lagerring 21 umfasst eine zumindest abschnittsweise brünierte Oberfläche 23 und eine Markierung 24. Die Markierung 24 umfasst eine zink-, chrom-, kupfer-, gold- und/oder silberhaltige Nichteisenverbindung. Ferner weist die Markierung 24 eine Farbe auf, die sich von einer Farbe der brünierten Oberfläche 23 unterscheidet. Die Markierung 24 ist wenigstens teilweise auf die Brünierung 23 aufgebracht.

Der Lagerring 21 kann beispielsweise nach dem Verfahren 7 markiert worden sein. Die Markierung 24 wurde nach dem Brünieren aufgebracht. Dadurch kann die Markierung 24 auf der brünierten Oberfläche 24 angeordnet sein. Bei anderen Ausführungsbeispielen kann die brünierte Oberfläche 23 auch durch die nachträglich aufgebrachte Markierung 24 zumindest teilweise zersetzt werden. Beispielsweise könnte auch der Lagerring 21 ein Innenring des Lagers 26 sein. Das Lager 26 kann ein Wälzlager sein, das eine Mehrzahl von Wälzkörpern 27 umfasst.

In weiteren nicht dargestellten Ausführungsbeispielen können die Lagerringe nach den Ausführungsbeispielen beispielsweise ein Innen- und/oder Außenring für ein Gleit- oder ein anders aufgebautes Wälzlager sein.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 1: Verfahren
- 3: Abscheiden
- 5: Brünieren
- 6: Abscheiden
- 7: Verfahren
- 9: Brünieren
- 11: Abscheiden
- 13: Lagerring
- 14: Schwamm
- 15: Folie
- 16: Oberfläche
- 17: Brünierflüssigkeit
- 18: Markierung
- 19: brünierte Oberfläche
- 20: Fläche
- 21: Lagerring
- 22: Oberfläche
- 23: brünierte Oberfläche
- 24: Markierung
- 26: Lager
- 27: Wälzkörper
- 28: Markierung
- 29: Folie

## Patentansprüche

1. Verfahren (1) zum Markieren eines Lagerringes (13), wobei das Verfahren (1) umfasst:
Abscheiden (3) einer metallischen Nichteisenverbindung oder eines Nichteisenmetalls auf einer Oberfläche (16) des unbrünierten Lagerringes (13), sodass sich eine Markierung (18) an der Oberfläche (16) des Lagerringes (13) ausbildet, wobei die Markierung (18) eine Farbe aufweist, die sich von der Farbe einer brünierten Oberfläche (19) unterscheidet; und
zumindest abschnittsweises Brünieren (5) der Oberfläche (16) des Wälzlagerings (13).

2. Verfahren (1) nach Anspruch 1, wobei die metallische Nichteisenverbindung oder das Nichteisenmetall Chrom, Nickel, Gold und/oder Silber umfasst.

3. Verfahren (1) nach einem der vorhergehenden Ansprüche, wobei das Abscheiden (3) in einem nasschemischen Verfahren erfolgt, wobei das nasschemische Verfahren elektrolytisch oder außenstromlos chemisch ist.

4. Verfahren (1) nach einem der vorhergehenden Ansprüche, wobei nach dem Brünieren (5) eine weiteres Abscheiden der metallischen Nichteisenverbindung oder des Nichteisenmetalls auf der Oberfläche (16) des brünierten Lagerringes (13) erfolgt, sodass sich eine weitere Markierung an der Oberfläche (16) des Lagerringes (13) ausbildet, wobei die weitere Markierung eine Farbe aufweist, die sich von der Farbe der brünierten Oberfläche (19) unterscheidet.

5. Lagerring (13) umfassend:
eine zumindest abschnittsweise brünierte Oberfläche (19); und
eine Markierung (18) mit einer Fläche (20), wobei die Markierung (18) eine Farbe aufweist, die sich von einer Farbe der brünierten Oberfläche (19) unterscheidet, wobei die Fläche der Markierung (18) und eine Fläche der Oberfläche, die der Fläche (20) der Markierung (18) entspricht und von dieser überdeckt ist, unbrüniert ist.

6. Verfahren (7) zum Beschriften eines Lagerringes (21), wobei das Verfahren (7) umfasst:
zumindest abschnittsweises Brünieren (9) einer Oberfläche des Lageringes; und
Abscheiden (11) eines zink-, kupfer-, chrom-, gold- und/oder silberhaltigen Nichteisenmetalls oder Nichteisenverbindung oder auf einer brünierten Oberfläche (23) des brünierten Lagerringes (21), sodass sich eine Markierung (24) an der brünierten Oberfläche (23) des Lagerringes (21) ausbildet, wobei die Markierung (24) eine Farbe aufweist, die sich von der Farbe der brünierten Oberfläche (23) unterscheidet.

7. Verfahren (7) nach Anspruch 6, wobei ein Elektrolyt, der die Nichteisenverbindung oder das Nichteisenmetall umfasst einen pH-Wert größer 5,0 aufweist.

8. Verfahren (7) nach einem der Ansprüche 6 bis 7, wobei das Abscheiden (11) der Nichteisenverbindung oder des Nichteisenmetalls in einem Tampon- oder Tampongalvanisierverfahren erfolgt.

9. Verfahren (7) nach einem der Ansprüche 6 bis 8, wobei der Elektrolyt eine Nitrat-oder Nitritlösung umfasst.

10. Lagerring (21) umfassend:
eine zumindest abschnittsweise brünierte Oberfläche (23); und
eine Markierung (24), die ein zink-, kupfer-, chrom-, gold- und/oder silberhaltiges Nichteisenmetall oder Nichteisenverbindung umfasst und die eine andere Farbe aufweist, als die brünierte Oberfläche (23), wobei die Markierung (24) wenigstens teilweise auf die brünierte Oberfläche (23) aufgebracht ist.
